# EUROPEAN PATENT SPECIFICATION

(11) **EP 1 785 624 B1**
(45) Date of publication and mention of the grant of the patent: **01.12.2010**
(21) Application number: 06015499.4
(22) Date of filing: 25.07.2006
(51) Int. Cl.: F04B 35/04, F04B 39/02

(54) **Linear compressor**
Linearverdichter
Compresseur linéaire

(30) Priority: 10.11.2005 KR 20050107697
(43) Date of publication of application: 16.05.2007
(73) Proprietor: LG Electronics Inc., Yongdungpo-gu Seoul 150-010 (KR)
(72) Inventor: Park, Hong Hee No.301, Seoul 130-061 (KR); Hwang, Seon Woong No.504-1102 Ggum-maeul, Kyungki-do 431-076 (KR); Choi, Ki Chul No.101-602 Sungwon Apt., Seoul 158-053 (KR)
(74) Representative: Vossius & Partner

(56) References cited:
- EP-A- 0 994 253
- WO-A-97/01033
- WO-A-02/073034
- US-A1- 2005 142 009

## Description

The present invention relates to a linear compressor, and more particularly, to a linear compressor in which a piston and a cylinder are arranged to extend vertically and oil suction paths are perforated through a wall of the cylinder to supply oil into the cylinder, whereby the oil supply structure of the compressor is simplified, and thus, manufacturing costs and assembling time of the compressor can be reduced.

Generally, a linear compressor is an apparatus configured in such a fashion that a piston reciprocally moves in a cylinder upon receiving a linear drive force of a linear motor to perform suction, compression, and discharge operations of fluid, such as gaseous refrigerant, (hereinafter, referred to as "fluid").

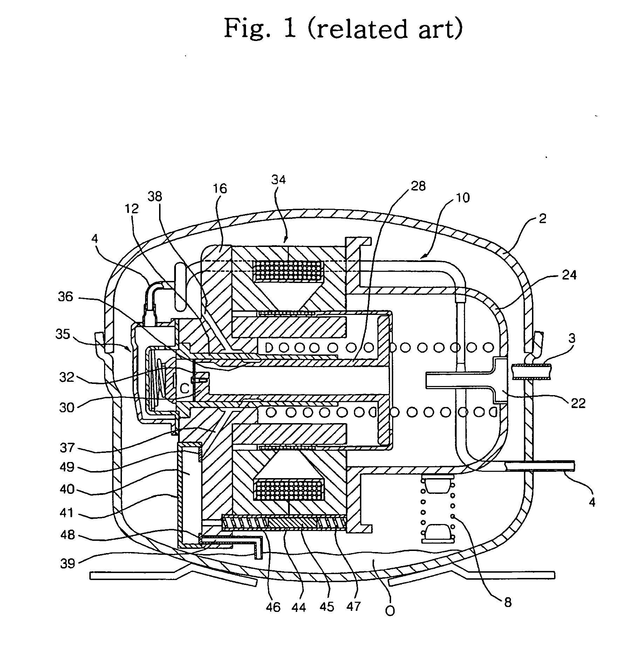

FIG. 1 is a sectional view illustrating a conventional linear compressor.

As shown in FIG. 1, the conventional linear compressor comprises a shell 2 in which oil O is received, a linear compression unit 10 vibratably arranged in the shell 2 by use of a damper 8 to perform suction, compression, and discharge operations of fluid, and an oil supply device arranged below the linear compression unit 10 to pump the oil O, received in the bottom of the shell 2, into the linear compression unit 10 when the linear compression unit 10 vibrates.

A fluid suction pipe 3 and a fluid discharge pipe 4 are penetrated through the shell 2, and the fluid discharge pipe 4 is directly connected to the linear compression unit 10, such that the fluid is sucked into the shell 2 through the suction pipe 3, and then, is again discharged through the discharge pipe 4 after being compressed in the linear compression unit 10.

The linear compression unit 10 includes a frame 16 having a cylinder 12, a back cover 24 having a fluid suction pipe 22, a piston 30 arranged to perform linear reciprocating movements in the cylinder 12, the piston 30 being internally formed with a fluid suction path 28 to allow the fluid to be sucked into the cylinder 12, a suction valve 32 mounted in the piston 30 to open or close the fluid suction path 28, a linear motor 34 to linearly reciprocate the piston 30, and a discharge valve assembly 35 mounted to open or close a leading end of the cylinder 12, the discharge valve assembly 35 being connected to the discharge pipe 4.

For the sake of lubricating/cooling both the cylinder 12 and the piston 30, an oil pocket 36 is formed on at least one of the inner circumference of the cylinder 12 and the outer circumference of the piston 30.

An oil supply path 37 is formed through both the cylinder 12 and the frame 16 such that the oil O is supplied into the oil pocket 36 by the oil supply device. Also, an oil discharge path 38 is formed through both the cylinder 12 and the frame 16 such that the oil O in the oil pocket 36 is discharged out of the linear compression unit 10.

The oil supply device includes an oil pipe 39 which is partially immersed in the oil O, an oil cover 41 coupled to the frame 16 to define an oil passage 40 therebetween, an oil cylinder 44 arranged below the linear compression unit 10 to communicate with the oil passage 40, an oil piston 45 disposed in the oil cylinder 44 to perform linear reciprocating movements in the cylinder 44, front and rear oil springs 46 and 47 disposed in the oil cylinder 44 to elastically support the oil piston 45, an oil suction valve 48 adapted to operate based on a pressure difference between the oil pipe 39 and the oil passage 40 for opening and closing an entrance of the oil passage 40, and an oil discharge valve 49 adapted to operate based on a pressure difference between the oil passage 40 and the oil supply path 37 for opening and closing an exit of the oil passage 40.

In the linear compressor having the above-described configuration, if the linear compression unit 10 vibrates, the oil piston 45 reciprocally moves simultaneously.

Specifically, when the oil piston 45 retracts, the oil passage 40 is in a low-pressure state, causing the oil suction valve 48 to be opened. Thereby, the oil O is sucked through the oil pipe 39 to fill the oil passage 40.

Conversely, when the oil piston 45 advances, the oil passage 40 is in a high-pressure state, causing the oil discharge valve 49 to be opened. Thereby, the oil O in the oil passage 40 is supplied into a space between the cylinder 12 and the piston 30 by passing through the oil supply path 37.

After being used to lubricate/cool both the cylinder 12 and the piston 30, the oil is discharged out of the linear compression unit 10 by passing through the oil discharge path 38, to drain into the bottom of the shell 2.

A problem of the conventional linear compressor is that it requires many oil pumping parts, such as for example, the oil cylinder 44, oil piston 45, front and rear oil springs 46 and 47, and therefore, suffers from a complicated structure, difficult assembling work, and increased manufacturing costs.

US 2005/0142009 A1 (closest prior art) shows a reciprocating compressor which includes a reciprocating motor that generates a reciprocation force and a compressing unit to which a discharge pipe that discharges a compressed fluid is connected. The compressing unit compresses a fluid by receiving the reciprocation force generated by the reciprocating motor. A frame, to which the reciprocating motor and the compressing unit are fixed, is connected to a suction pipe that sucks a fluid to be compressed at one side thereof, and that contains lubricating oil therein.

Moreover, the document WO 97/01033 discloses a coolant oil supply apparatus for a linear compressor which is capable of enabling a reciprocating operation of a piston by substantially supplying a coolant (oil) having a stator at one side of a flange for generating a magnetic field therearound; a horizontal operating unit, which horizontally reciprocates, including a magnet disposed inside the stator and a piston, which is integral with the magnet, horizontally reciprocating within the cylinder; a coolant oil pocket for guiding a predetermined amount of coolant oil to an outer circumferential surface of the cylinder; a plurality of coolant oil sucking/discharging holes formed at the cylinder; a oil passing pipe and a valve plate for introducing the coolant oil discharged through the coolant oil discharging hole.

Therefore, the present invention has been made in view of the above problems, and it is an object of the present invention to provide a linear compressor which can achieve a simplified oil pumping structure, and thus, inexpensive manufacturing costs.

In accordance with one aspect of the present invention, the above and other objects can be accomplished by the provision of a linear compressor according to claim 1 comprising: a shell; an elongated cylinder extending vertically in the shell; a piston disposed to perform linear reciprocating movements in the cylinder; a linear motor to linearly reciprocate the piston in a vertical direction; and an oil supply device provided in the cylinder to supply oil into a space between the cylinder and the piston.

Preferably, the shell may store the oil therein: and the oil supply device may include a plurality of oil suction paths formed in the cylinder for introducing the oil stored in the shell into the space between the cylinder and the piston.

Preferably, the oil suction paths may be perforated through a wall of the cylinder.

Preferably, the linear compressor may further comprise a motor holder radially spaced apart from an outer circumference of the cylinder and used to secure the linear motor.

Preferably, the oil supply device may include: a storage portion formed between the cylinder and the motor holder to store the oil therein; and a plurality of oil suction paths formed in the cylinder for introducing the oil stored in the storage portion into the space between the cylinder and the piston.

Preferably, the storage portion may be provided with an oil cap to prevent oil leakage.

Preferably, the storage portion may be provided with a gasket inserted between the cylinder and the motor holder.

Preferably, the oil supply device may include: a storage portion formed in a wall of the cylinder to store the oil therein; and a plurality of oil suction paths formed in the cylinder for introducing the oil stored in the storage portion into the space between the cylinder and the piston.

Preferably, the plurality of oil suction paths may be spaced apart from one another by a predetermined distance along a circumferential direction of the cylinder.

Preferably, the plurality of oil suction paths may be spaced apart from one another by a predetermined distance along a vertical direction of the cylinder.

Preferably, an oil pocket may be formed on at least one of an inner wall surface of the cylinder and an outer wall surface of the piston.

Preferably, the oil may be filled to a height higher than the oil suction paths.

In the linear compressor of the present invention having the above-described configuration, the piston and the cylinder are arranged to extend vertically in the shell, and the plurality of oil suction paths are perforated through the cylinder for introducing oil, stored in the shell, into a space between the cylinder and the piston without requiring separate pumping means, whereby the oil supply structure can be simplified with a reduced number of oil supply parts, and therefore, the manufacturing costs and assembling time of the linear compressor can be reduced.

Further, when the oil storage portion is defined in a space between the cylinder and the motor holder, it is possible to prevent the oil from being introduced into the linear motor or piston, resulting in an improvement in reliability.

Furthermore, by providing the storage portion with the oil cap, there is no risk of oil leakage.

The plurality of oil suction paths are vertically spaced apart from one another by a predetermined distance, and the oil is filled to a height higher than uppermost ones of the oil suction paths, whereby the oil can be evenly introduced into a space between the cylinder and the piston, and therefore, more effective lubrication and cooling of the piston and the cylinder can be accomplished.

The above and other objects, features and other advantages of the present invention will be more clearly understood from the following detailed description taken in conjunction with the accompanying drawings, in which:
FIG. 1 is a sectional view illustrating a conventional linear compressor;
FIG. 2 is a sectional view illustrating a linear compressor according to a first embodiment of the present invention; and
FIG. 3 is a sectional view illustrating a linear compressor according to a second embodiment of the present invention.

Now, preferred embodiments of the present invention will be explained with reference to the accompanying drawings.

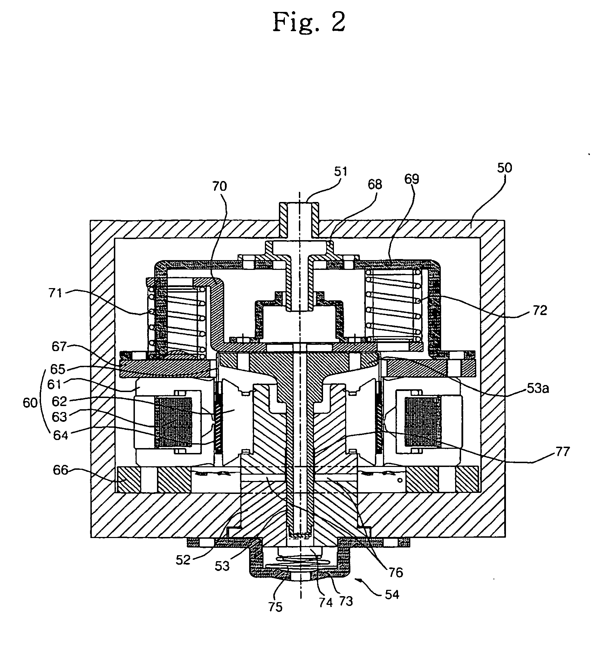

FIG. 2 is a sectional view illustrating a linear compressor according to a first embodiment of the present invention.

As shown in FIG. 2, the linear compressor according to the first embodiment of the present invention comprises a shell 50 formed with a suction port 51 and a discharge port, an elongated cylinder 52 extending vertically in the shell 50, a piston 53 disposed in the cylinder 52 to perform linear reciprocating movements in the cylinder 52, a linear motor 60 to linearly reciprocate the piston 53, a discharge unit assembly 54 mounted to the discharge port at the outside of the shell 50 to allow the fluid, compressed in the cylinder 52, to be discharged through the discharge unit assembly 54, and an oil supply device formed in the cylinder 52 to supply oil into a space between the cylinder 52 and the piston 53.

The shell 50 has a cylindrical structure, and is provided at the top thereof with the suction port 51 and at the bottom thereof with the discharge port.

The cylinder 52 is directly fixed to the inner circumference of the shell 50 at a position facing the discharge port of the shell 50.

The linear motor 60 is basically divided into a stator and a mover. The stator includes an outer stator 61, an inner stator 62 spaced apart inward from the outer stator 61 to have a constant gap therebetween, and a coil 63 mounted in the outer stator 61 to produce a magnetic field. The outer and inner stators 61 and 62 take the form of stacks.

The mover includes a magnet 64 located between the outer stator 61 and the inner stator 62 to linearly move by a magnetic force that is produced around the coil 63, and a magnet frame 65 fixed to both the magnet 64 and the piston 53 to transmit a linear movement force of the magnet 64 to the piston 53.

One side of the outer stator 61 is fixed to a motor base 66 mounted to the shell 50, and the other side of the outer stator 61 is fixed to a stator cover 67, which is provided to cover the outer stator 61.

The motor base 66 is made of a non-magnetic material.

The stator cover 67 is fastened to a back cover 69, and in turn, a suction pipe 68 is penetrated through the back cover 69 to be aligned with the suction port 51.

The inner stator 62 is directly fixed to the outer circumference of the cylinder 52.

The piston 53 is provided at a trailing end thereof with a flange 53a to be fixed to the magnet frame 65.

To provide the piston 53 with an elastic force when the piston 53 performs linear reciprocating movements, a main spring assembly is mounted to a spring support 70 that is seated onto the flange 53a.

The main spring assembly includes a first main spring 71 located between the spring support 70 and the stator cover 67, and a second main spring 72 located between the spring support 70 and the back cover 69.

The discharge unit assembly 54 includes a discharge cover 73 fixed to the outer surface of the shell 50 for the damping of fluid discharged through the discharge port, a discharge valve 74 located inside the discharge cover 73 to open or close the discharge port, and a discharge spring 75 attached to the discharge cover 73 to provide the discharge valve 74 with an elastic force.

The shell 50 is configured to store oil O therein. The oil supply device includes a plurality of oil suction paths 76 for introducing the oil O stored in the shell 50 into a space between the cylinder 52 and the piston 53.

The oil suction paths 76 are perforated through the wall of the cylinder 52. The description of the present embodiment is limited such that the oil suction paths 76 extend horizontally, but it can be understood that the oil suction paths may be tilted upward or downward.

Also, in the description of the present embodiment, the plurality of oil suction paths 76 are explained such that they are circumferentially spaced apart from one another by a predetermined distance, but the plurality of oil suction paths may be vertically spaced apart from one another.

Preferably, the oil O is filled in the shell 50 to a height higher than a height of the oil suction paths 76.

An oil pocket 77 is formed on at least one of an inner wall surface of the cylinder 52 and an outer wall surface of the piston 53 such that the oil, introduced through the oil suction paths 76, remains in the oil pocket 77. The present embodiment is limited such that the inner wall surface of the cylinder 52 has a stepped structure to form the oil pocket 77.

Hereinafter, the operation of the linear compressor according to the first embodiment of the present invention having the above-described configuration will be explained.

If a voltage is applied to the coil 63, the coil 63 produces a magnetic field therearound, such that the magnet 64 performs linear reciprocating movements while interacting with the magnetic field. The linear reciprocating movements of the magnet 64 is transmitted to the piston 53 via the magnet frame 65, such that the piston 53 performs linear reciprocating movements in the cylinder 52.

As the piston 53 linearly reciprocates up and down, the fluid, sucked into the cylinder 52, is compressed by the piston 53, and then, is discharged through the discharge valve assembly 54.

During the linear reciprocating movements of the piston 53, the oil O is sucked into a space between the cylinder 52 and the piston 53 through the oil suction paths 76.

The oil O, sucked through the oil suction paths 76, is introduced into the oil pocket 77, thereby being used to lubricate/cool contact areas of both the piston 53 and the cylinder 52 when the piston 53 performs the linear reciprocating movements.

In the linear compressor having the above-described configuration, both the cylinder 52 and the piston 53 are arranged to extend vertically in the shell 50, such that a part of the cylinder 52 and the oil O suction paths 76 are immersed in the oil O. This ensures the oil O to be smoothly supplied into a space between the cylinder 52 and the piston 53 without requiring separate pumping means.

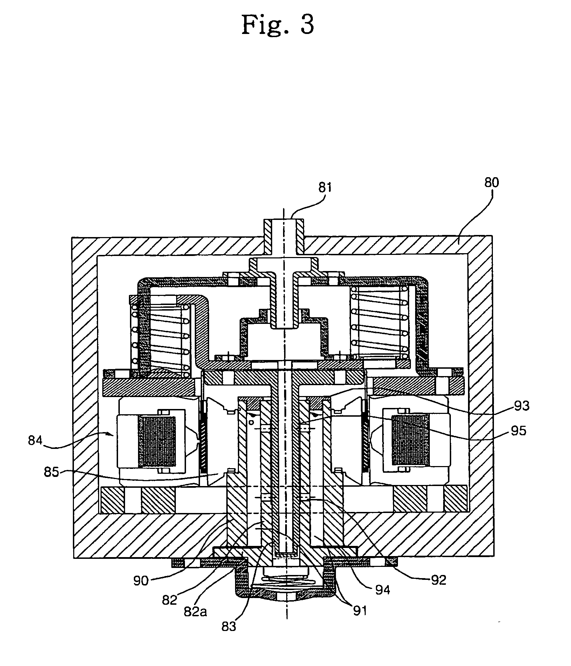

FIG. 3 is a sectional view illustrating a linear compressor according to a second embodiment of the present invention.

As shown in FIG. 3, the linear compressor according to the second embodiment of the present invention comprises a shell 80 formed with a suction port 81 and a discharge port, an elongated cylinder 82 extending vertically in the shell 80, a piston 83 disposed in the cylinder 82 to perform linear reciprocating movements, a linear motor 84 to linearly reciprocate the piston 83 up and down, a discharge unit assembly 85 mounted to the discharge port at the outside of the shell 80 to allow the fluid, compressed in the cylinder 82, to be discharged through the discharge unit assembly 85, and an oil supply device formed in the cylinder 82 to supply oil into a space between the cylinder 82 and the piston 83.

In the present embodiment, a motor holder 90 is provided around the cylinder 82 to secure the linear motor 84.

The motor holder 90 has a cylindrical shape, and is radially spaced apart from the outer circumference of the cylinder 82. An inner stator of the linear motor 84 is fixedly mounted to the motor holder 90.

The oil supply device includes a storage portion 91 defined between the cylinder 82 and the motor holder 90 to store the oil O therein, and a plurality of oil suction paths 92 perforated through a wall of the cylinder 82 for introducing the oil O stored in the storage portion 91 into a space between the cylinder 82 and the piston 83. No detailed explanation of other configurations and operations of the oil supply device will be given.

The cylinder 82, having a cylindrical shape, is formed with a radially protruding flange 82a, such that the cylinder 82 is fixed to the inner circumference of the shell 80 at a position facing the discharge port of the shell 80.

The storage portion 91 is a space defined between the cylinder 82 and the motor holder 90. The bottom of the storage portion 91 is defined by the flange 82a, and an oil cap 93 is provided to cover the top of the storage portion 91 to prevent leakage of the oil stored in the storage portion 91.

A gasket 94 is inserted between the flange 82a of the cylinder 82 and the motor holder 90.

The plurality of oil suction paths 92 are perforated through the wall of the cylinder 82 such that they are vertically and circumferentially spaced apart from one another by predetermined distances.

Preferably, the oil is stored in the storage portion 91 to a height higher than uppermost ones of the oil suction paths 92.

An oil pocket 95 is formed on at least one of an inner wall surface of the cylinder 82 and an outer wall surface of the piston 83 such that the oil, introduced through the oil suction paths 92, remains in the oil pocket 95. The description of the present embodiment is limited such that the inner wall surface of the cylinder 82 has a stepped structure to form the oil pocket 95.

In the linear compressor having the above-described configuration, the oil O stored in the storage portion 91 is introduced into a space between the cylinder 82 and the piston 83 through the oil suction paths 92 in accordance with vibrations of the compression unit, thereby serving to lubricate/cool both the cylinder 82 and the piston 83.

With the present embodiment, due to the fact that the oil O is stored in the storage portion 91, it is possible to prevent the oil O from being introduced into the linear motor 84 or the piston 83.

Meanwhile, the second embodiment of the present invention explains that the storage portion 91 is defined between the cylinder 82 and the motor holder 90, but is not limited thereto. Alternatively, the oil storage portion may be formed in the wall of the cylinder.

As is apparent from the above description, the present invention provides a linear compressor having the following several advantages.

Firstly, the linear compressor is configured such that a piston and a cylinder are arranged to extend vertically in a shell, and oil suction paths are perforated through the cylinder for introducing oil, stored in the shell, into a space between the cylinder and the piston without requiring separate pumping means, whereby the oil supply structure can be simplified with a reduced number of oil supply parts, and therefore, the manufacturing costs and assembling time of the linear compressor can be reduced.

Secondly, when an oil storage portion is defined in a space between the cylinder and a motor holder, it is possible to prevent the oil from being introduced into a linear motor or piston, resulting in an improvement in reliability.

Thirdly, by providing the storage portion with an oil cap, there is no risk of oil leakage.

Fourthly, the plurality of oil suction paths are vertically spaced apart from one another by a predetermined distance, and the oil is filled to a height higher than uppermost ones of the oil suction paths, whereby the oil can be evenly introduced into a space between the cylinder and the piston, and therefore, more effective lubrication and cooling of the piston and the cylinder can be accomplished.

Although the preferred embodiments of the present invention have been disclosed for illustrative purposes, various modifications- are possible, within the scope of the invention as disclosed in the accompanying claims.

## Claims

1. A linear compressor comprising:
a shell (50;80);
an elongated cylinder (52;82) extending vertically in the shell (50;80);
a piston (53;83) disposed to perform linear reciprocating movements in the cylinder (52;82);
a linear motor (60;84) including an outer stator (61), an inner stator (62), and a magnet (64) to linearly reciprocate the piston (53;83) in a vertical direction;
an oil supply device provided in the cylinder (52;82) to supply oil into a space between the cylinder (52;82) and the piston (53;83); and
a motor base (66) mounted on a bottom of the shell (50) so that the outer stator (61) is fixed to the motor base (66), **characterized in that** the inner stator (62, 85) is directly fixed to an outer circumference of the cylinder (52, 82).

2. The compressor as set forth in claim 1, wherein:
the shell (50) stores the oil therein: and
the oil supply device includes a plurality of oil suction paths (76) formed in the cylinder (52) for introducing the oil stored in the shell (50) into the space between the cylinder (52) and the piston (53).

3. The compressor as set forth in claim 2, wherein the oil suction paths (76) are perforated through a wall of the cylinder (52).

4. The compressor as set forth in any one of the preceding claims, further comprising:
a motor holder (90) radially spaced apart from an outer circumference of the cylinder (82) and used to secure the linear motor (84).

5. The compressor as set forth in claim 4, wherein the oil supply device includes:
a storage portion (91) formed between the cylinder (82) and the motor holder (90) to store the oil therein; and
a plurality of oil suction paths (92) formed in the cylinder (82) for introducing the oil stored in the storage portion (91) into the space between the cylinder (82) and the piston (83).

6. The compressor as set forth in claim 5, wherein the storage portion (91) is provided with an oil cap (93) to prevent oil leakage.

7. The compressor as set forth in claim 5, wherein the storage portion (91) is provided with a gasket (94) inserted between the cylinder (82) and the motor holder (90).

8. The compressor as set forth in any one of claims 1 to 4, wherein the oil supply device includes:
a storage portion formed in a wall of the cylinder to store the oil therein; and
a plurality of oil suction paths formed in the cylinder for introducing the oil stored in the storage portion into the space between the cylinder and the piston.

9. The compressor as set forth in any one of claims 1 to 8, wherein the plurality of oil suction paths (76;92) are spaced apart from one another by a predetermined distance along a circumferential direction of the cylinder.

10. The compressor as set forth in any one of claims 1 to 8, wherein the plurality of oil suction paths (76;92) are spaced apart from one another by a predetermined distance along a vertical direction of the cylinder.

11. The compressor as set forth in any one of claims 1 to 10, wherein an oil pocket (77;95) is formed on at least one of an inner wall surface of the cylinder (52;82) and an outer wall surface of the piston (53;83).

12. The compressor as set forth in any one of claims 2 to 11, wherein the oil is filled to a height higher than the oil suction paths (76;92).

## Patentansprüche

1. Linearverdichter, der aufweist:
ein Gehäuse (50;80);
einen länglichen Zylinder (52;82), der sich vertikal im Gehäuse (50;80) erstreckt;
einen Kolben (53;83), der angeordnet ist, um lineare Hin- und Herbewegungen im Zylinder (52;82) durchzuführen;
einen Linearmotor (60;84), der einen äußeren Stator (61),
einen inneren Stator (62) und einen Magneten (64) aufweist,
um den Kolben (53;83) in einer vertikalen Richtung linear hin- und herzubewegen;
eine im Zylinder (52;82) vorgesehene Ölzufuhrvorrichtung,
um in einen Raum zwischen dem Zylinder (52;82) und dem Kolben (53;83) Öl zuzuführen; und
eine Motorbasis (66), die an einem Boden des Gehäuses (50) angebracht ist, so daß der äußere Stator (61) an der Motorbasis (66) angeordnet ist, **dadurch gekennzeichnet, daß** der innere Stator (62, 85) direkt an einem Außenumfang des Zylinders (52, 82) angeordnet ist.

2. Verdichter nach Anspruch 1, wobei:
das Gehäuse (50) das Öl darin speichert; und
die Ölzufuhrvorrichtung mehrere, im Zylinder (52) ausgebildete Ölansaugwege (76) zum Einleiten des im Gehäuse (50) gespeicherten Öls in den Raum zwischen dem Zylinder (52) und dem Kolben (53) aufweist.

3. Verdichter nach Anspruch 2, wobei die Ölansaugwege (76) durch eine Wand des Zylinders (52) perforiert sind.

4. Verdichter nach einem der vorhergehenden Ansprüche, der ferner aufweist:
einen Motorhalter (90), der radial von einem Außenumfang des Zylinders (82) beabstandet ist und verwendet wird, um den Linearmotor (84) zu sichern.

5. Verdichter nach Anspruch 4, wobei die Ölzufuhrvorrichtung aufweist:
einen zwischen dem Zylinder (82) und dem Motorhalter (90) ausgebildeten Speicherabschnitt (91), um darin das Öl zu speichern; und
mehrere im Zylinder (82) ausgebildete Ölansaugwege (92) zum Einleiten des im Speicherabschnitt (91) gespeicherten Öls in den Raum zwischen dem Zylinder (82) und dem Kolben (83).

6. Verdichter nach Anspruch 5, wobei der Speicherabschnitt (91) mit einer Ölkappe (93) versehen ist, um einen Ölaustritt zu verhindern.

7. Verdichter nach Anspruch 5, wobei der Speicherabschnitt (91) mit einer Dichtung (94) versehen ist, die zwischen dem Zylinder (82) und dem Motorhalter (90) eingefügt ist.

8. Verdichter nach einem der Ansprüche 1 bis 4, wobei die Ölzufuhrvorrichtung aufweist:
einen in einer Wand des Zylinders ausgebildeten Speicherabschnitt, um das Öl darin zu speichern; und
mehrere im Zylinder ausgebildete Ölansaugwege zum Einleiten des im Speicherabschnitt gespeicherten Öls in den Raum zwischen dem Zylinder und dem Kolben.

9. Verdichter nach einem der Ansprüche 1 bis 8, wobei die mehreren Ölansaugwege (76;92) um einen vorgegebenen Abstand längs einer Umfangsrichtung des Zylinders voneinander beabstandet sind.

10. Verdichter nach einem der Ansprüche 1 bis 8, wobei die mehreren Ölansaugwege (76;92) um einen vorgegebenen Abstand längs einer vertikalen Richtung des Zylinders voneinander beabstandet sind.

11. Verdichter nach einem der Ansprüche 1 bis 10, wobei eine Öltasche (77;95) an einer Innenwandfläche des Zylinders (52;82) und/oder einer Außenwandfläche des Kolbens (53;83) ausgebildet ist.

12. Verdichter nach einem der Ansprüche 2 bis 11, wobei das Öl bis zu einer Höhe gefüllt wird, die höher als die Ölansaugwege (76;92) ist.

## Revendications

1. Compresseur linéaire comprenant :
une coque (50 ; 80) ;
un cylindre allongé (52 ; 82) s'étendant verticalement dans la coque (50 ; 80) ;
un piston (53 ; 83) disposé pour réaliser des mouvements de va-et-vient linéaires dans le cylindre (52 ; 82) ;
un moteur linéaire (60 ; 84) comprenant un stator externe (61), un stator interne (62), et un aimant (64) pour faire effectuer des mouvements de va-et-vient de manière linéaire au piston (53 ; 83) dans une direction verticale ;
un dispositif d'alimentation d'huile prévu dans le cylindre (52 ; 82) pour alimenter l'huile dans un espace situé entre le cylindre (52 ; 82) et le piston (53 ; 83) ; et
une base de moteur (66) montée sur un fond de la coque (50), de sorte que le stator externe (61) est fixé sur la base (66) du moteur, **caractérisé en ce que** le stator interne (62, 85) est directement fixé sur une circonférence externe du cylindre (52, 82).

2. Compresseur selon la revendication 1, dans lequel :
la coque (50) stocke de l'huile à l'intérieur de cette dernière ; et
le dispositif d'alimentation d'huile comprend une pluralité de trajectoires d'aspiration d'huile (76) formées dans le cylindre (52) pour introduire l'huile stockée dans la coque (50) dans l'espace situé entre le cylindre (52) et le piston (53).

3. Compresseur selon la revendication 2, dans lequel les trajectoires d'aspiration d'huile (76) sont perforées à travers une paroi du cylindre (52).

4. Compresseur selon l'une quelconque des revendications précédentes, comprenant en outre :
un support de moteur (90) radialement espacé d'une circonférence externe du cylindre (82) et utilisé pour fixer le moteur linéaire (84).

5. Compresseur selon la revendication 4, dans lequel le dispositif d'alimentation d'huile comprend :
une partie de stockage (91) formée entre le cylindre (82) et le support de moteur (90) pour stocker l'huile à l'intérieur de cette dernière ; et
une pluralité de trajectoires d'aspiration d'huile (92) formées dans le cylindre (82) pour introduire l'huile stockée dans la partie de stockage (91) dans l'espace situé entre le cylindre (82) et le piston (83).

6. Compresseur selon la revendication 5, dans lequel la partie de stockage (91) est prévue avec un capuchon d'huile (93) pour empêcher les fuites d'huile.

7. Compresseur selon la revendication 5, dans lequel la partie de stockage (91) est prévue avec un joint (94) inséré entre le cylindre (82) et le support de moteur (90).

8. Compresseur selon l'une quelconque des revendications 1 à 4, dans lequel le dispositif d'alimentation d'huile comprend :
une partie de stockage formée dans une paroi du cylindre pour stocker l'huile à l'intérieur de cette dernière ; et
une pluralité de trajectoires d'aspiration d'huile formées dans le cylindre pour introduire l'huile stockée dans la partie de stockage dans l'espace situé entre le cylindre et le piston.

9. Compresseur selon l'une quelconque des revendications 1 à 8, dans lequel la pluralité de trajectoires d'aspiration d'huile (76 ; 92) sont espacées les unes des autres par une distance prédéterminée le long d'une direction circonférentielle du cylindre.

10. Compresseur selon l'une quelconque des revendications 1 à 8, dans lequel la pluralité de trajectoires d'aspiration d'huile (76 ; 92) sont espacées les unes des autres par une distance prédéterminée le long d'une direction verticale du cylindre.

11. Compresseur selon l'une quelconque des revendications 1 à 10, dans lequel une poche d'huile (77 ; 95) est formée sur au moins l'une parmi une surface de paroi interne du cylindre (52 ; 82) et une surface de paroi externe du piston (53 ; 83).

12. Compresseur selon l'une quelconque des revendications 2 à 11, dans lequel l'huile est remplie jusqu'à une hauteur supérieure aux trajectoires d'aspiration d'huile (76 ; 92).
